# EUROPEAN PATENT APPLICATION

(11) **EP 4 184 306 A1**
(43) Date of publication of application: **24.05.2023**
(21) Application number: 21853314.9
(22) Date of filing: 10.07.2021
(51) Int. Cl.: G06F 3/06

(54) **REDUNDANT ARRAY OF INDEPENDENT DISKS CARD, COMMAND PROCESSING METHOD, AND STORAGE DEVICE AND SYSTEM**

(30) Priority: 07.08.2020 CN 202010788778
(71) Applicant: Huawei Technologies Co., Ltd., Shenzhen, Guangdong 518129 (CN)
(72) Inventor: SHEN, Hui, Shenzhen, Guangdong 518129 (CN); CHEN, Ming, Shenzhen, Guangdong 518129 (CN)
(74) Representative: Thun, Clemens
(86) International application number: PCT/CN2021/105633
(87) International publication number: WO 2022/028208

(57) **Abstract**

A redundant array of independent disks card, a command processing method, a storage apparatus and system are provided. The redundant array of independent disks card includes a control module and N front-end modules, where N is a positive integer greater than or equal to 2. An n^{th} front-end module in the N front-end modules is configured to receive a command from an n^{th} host module in N host modules, and send the received command to the control module. The control module is configured to receive commands from the N front-end modules and process the received commands. A storage apparatus provided with the redundant array of independent disks card can recover faulty data more quickly during data recovery. In addition, a more flexible erasure code scheme can be implemented by using the redundant array of independent disks card.

## Description

### TECHNICAL FIELD

This application relates to the field of information technologies, and more specifically, to a redundant array of independent disks card, a command processing method, and a storage apparatus and system.

### BACKGROUND

In recent years, with the increase of a data amount, a massive storage technology has been applied more widely. As an amount of stored data increases, a storage capacity of a single storage node accordingly increases. Therefore, impact of storage node faults increases.

A storage node may include a host (host) and a storage system. Currently, there are two common storage node structures: a single host + a single storage system, and a plurality of hosts + a single storage system.

### 1. A single host + a single storage system

As the name implies, a storage node with a single host + a single storage system includes only one host that interacts with the storage system. In some cases, the storage node includes only one host. In some other cases, the storage node may alternatively include a plurality of hosts, but only one of the plurality of hosts can directly interact with the storage system in the storage node.

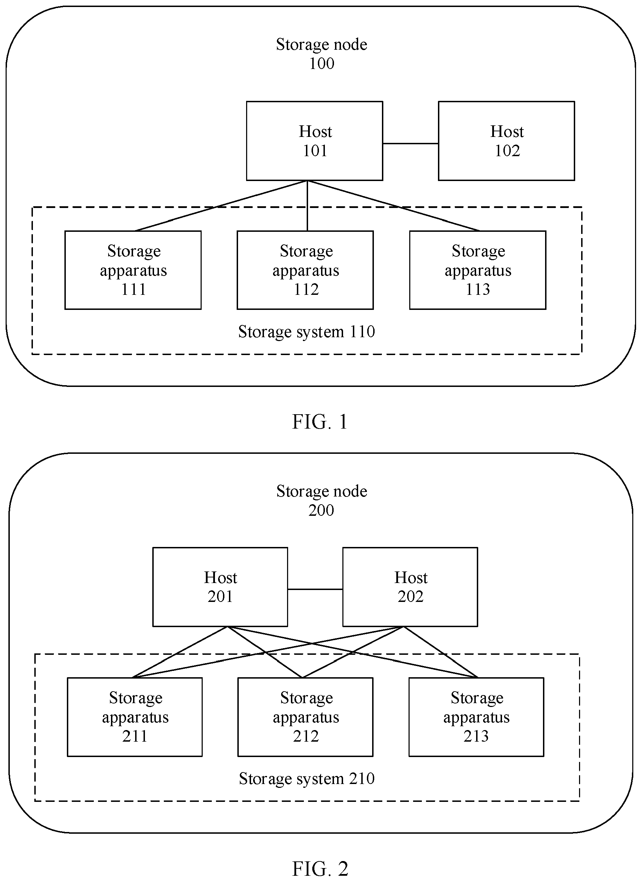

FIG. 1 is a schematic diagram of the storage node with a single host + a single storage system.

As shown in FIG. 1, a storage node 100 includes a host 101 and a host 102. The storage node 100 further includes a storage system 110, and the storage system 110 includes three storage apparatuses. The three storage apparatuses are respectively a storage apparatus 111, a storage apparatus 112, and a storage apparatus 113. Each of the three storage apparatuses may include one or more physical disks (for example, which may be mechanical hard disks, solid state disks (solid state disk, SSD), or solid state hybrid drives (solid state hybrid drive, SSHD)).

As shown in FIG. 1, only one host (namely, the host 101) in the storage node 100 can interact with the storage apparatuses in the storage system 110. Therefore, once the host 101 or a link between the host 101 and the storage apparatuses is faulty, the storage node 100 cannot run normally. To improve reliability of storage nodes, the industry proposes a plurality of hosts + a single storage system.

### 2. A plurality of hosts + a single storage system

A storage node with a plurality of hosts + a single storage system includes the plurality of hosts that interact with the storage system. Each of the plurality of hosts may directly interact with the storage system in the storage node.

FIG. 2 is a schematic diagram of the storage node with a plurality of hosts + a single storage system.

As shown in FIG. 2, a storage node 200 includes a host 201 and a host 202. The storage node 200 further includes a storage system 210, and the storage system 210 includes three storage apparatuses. The three storage apparatuses are respectively a storage apparatus 211, a storage apparatus 212, and a storage apparatus 213. Each of the three storage apparatuses may include one or more physical disks (for example, which may be mechanical hard disks, solid state disks (solid state disk, SSD), or solid state hybrid drives (solid state hybrid drive, SSHD)).

Both the host 201 and the host 202 may directly access the three storage apparatuses. Compared with the storage node 100, reliability of the storage node 200 is improved. However, there is still a possibility that the node 200 cannot be normally accessed. For example, a link between a computer device that needs to read data stored in the storage node 200 and the storage node 200 is faulty, or a communication interface used by the storage node 200 to communicate with the outside is faulty.

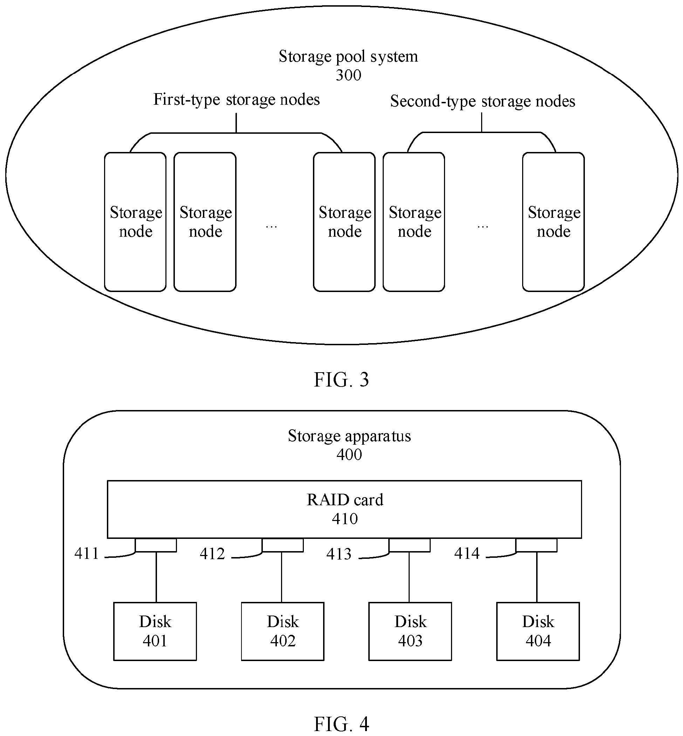

FIG. 3 is a schematic diagram of a storage pool system. As shown in FIG. 3, a storage pool system 300 includes a plurality of storage nodes. The storage node in the storage pool system 300 may be the storage node shown in FIG. 1 or FIG. 2.

The storage pool system 300 may back up data by using a single storage node as a granularity. For example, the storage pool system 300 may back up data by using an erasure code (erasure code, EC) technology. Some storage nodes in the storage pool system 300 may be configured to store original data (these storage nodes may be referred to as first-type storage nodes), and some other storage nodes are configured to store backup data (these storage nodes may be referred to as second-type storage nodes). As described above, a storage capacity of a single storage node is usually large. Therefore, if a storage node is faulty, it takes a long time to recover data stored in the storage node.

### SUMMARY

This application provides a redundant array of independent disks card, a command processing method, a storage apparatus, and a storage system, so as to improve a speed of recovering faulty data.

According to a first aspect, an embodiment of this application provides a redundant array of independent disks RAID card, including a control module and N front-end modules, where N is a positive integer greater than or equal to 2. An n^{th} front-end module in the N front-end modules is configured to: receive a command from an n^{th} host module in N host modules, and send the received command to the control module, where the N host modules respectively belong to N storage apparatuses, and n=1, ..., N. The control module is configured to receive commands from the N front-end modules and process the received commands. When performing EC, a storage apparatus provided with the RAID card may perform EC by using the storage apparatus as a granularity. In this way, an amount of data stored on an EC node is greatly reduced, and faulty data can be more quickly recovered during data recovery. In addition, the RAID card can be used to implement more flexible EC solutions. In addition, if a host module of a storage apparatus in which the RAID card is located is faulty, a read/write operation may be performed on data stored in the storage apparatus by using another storage node.

With reference to the first aspect, in a possible design, a type of the commands from the N host modules includes any one or more of an input/output I/O command, a first-type management command, or a second-type management command, and the control module is specifically configured to process the received command based on the type of the received command.

With reference to the first aspect, in a possible design, the control module is specifically configured to: when processing an I/O command from the n^{th} front-end module, stop receiving an I/O command from another front-end module other than the n^{th} front-end module; and when determining that the I/O command from the n^{th} front-end module meets a target condition, receive and process an I/O command from an m^{th} front-end module in the N front-end modules, and stop receiving an I/O command from another front-end module other than the m^{th} front-end module, where m is a positive integer less than or equal to N and not equal to n. The foregoing technical solution can reduce a conflict caused because a plurality of I/O commands read and write same data.

With reference to the first aspect, in a possible design, the determining that the I/O command from the n^{th} front-end module meets a target condition includes: determining that the obtained I/O command from the n^{th} front-end module is processed; or determining that P₁ I/O commands in obtained P I/O commands from the n^{th} front-end module are processed, and P₂ I/O commands time out, where P is a positive integer greater than or equal to 2, P₁ and P₂ are positive integers greater than or equal to 1 and less than P, and a sum of P₁ and P₂ is P.

With reference to the first aspect, in a possible design, before the determining that the I/O command from the n^{th} front-end module meets a target condition, the control module stops receiving the I/O command from the n^{th} front-end module.

With reference to the first aspect, in a possible design, the control module is further configured to: when processing the I/O command from the n^{th} front-end module, receive and process a first-type management command from one or more front-end modules in the N front-end modules.

With reference to the first aspect, in a possible design, the n^{th} front-end module is further configured to send command processing information to the control module. The command processing information includes a first command and identity information of a first queue, the first command is from the n^{th} host module, and the first queue is a queue that is in the front-end module and that is configured to manage the command from the n^{th} host module. The control module is further configured to: store a correspondence between the identity information of the first queue and the first command; and when obtaining first feedback information corresponding to the first command, send the first feedback information to the n^{th} front-end module based on the correspondence.

According to a second aspect, an embodiment of this application provides a command processing method. The method includes: An n^{th} front-end module in N front-end modules of a redundant array of independent disks RAID card receives a command from an n^{th} host module in N host modules, and sending the received command to a control module in the RAID card, where the N host modules respectively belong to N storage apparatuses, N is a positive integer greater than or equal to 2, and n=1, ..., N. The control module receives commands from the N front-end modules, and processing the received commands. In the foregoing technical solution, EC may be performed by using a storage apparatus as a granularity. In this way, an amount of data stored on an EC node is greatly reduced, and faulty data can be more quickly recovered during data recovery. In addition, the RAID card can be used to implement more flexible EC solutions. In addition, if a host module of a storage apparatus in which the RAID card is located is faulty, a read/write operation may be performed on data stored in the storage apparatus by using another storage node.

With reference to the second aspect, in a possible design, a type of the commands from the N host modules includes any one or more of an input/output I/O command, a first-type management command, or a second-type management command, and the control module is specifically configured to process the received command based on the type of the received command.

With reference to the second aspect, in a possible design, the processing the received commands includes: when processing an I/O command from the n^{th} front-end module, stopping receiving an I/O command from another front-end module other than the n^{th} front-end module; and when determining that the I/O command from the n^{th} front-end module meets a target condition, receiving and processing an I/O command from an m^{th} front-end module in the N front-end modules, and stopping receiving an I/O command from another front-end module other than the m^{th} front-end module, where m is a positive integer less than or equal to N and not equal to n. The foregoing technical solution can reduce a conflict caused because a plurality of I/O commands read and write same data.

With reference to the second aspect, in a possible design, the determining that the I/O command from the n^{th} front-end module meets a target condition includes: determining that the obtained I/O command from the n^{th} front-end module is processed; or determining that P₁ I/O commands in obtained P I/O commands from the n^{th} front-end module are processed, and P₂ I/O commands time out, where P is a positive integer greater than or equal to 2, P₁ and P₂ are positive integers greater than or equal to 1 and less than P, and a sum of P₁ and P₂ is P.

With reference to the second aspect, in a possible design, before the determining that the I/O command from the n^{th} front-end module meets a target condition, the method further includes: stopping receiving the I/O command from the n^{th} front-end module.

With reference to the second aspect, in a possible design, the method further includes: When processing the I/O command from the n^{th} front-end module, the control module receives and processes a first-type management command from one or more of the N front-end modules.

With reference to the second aspect, in a possible design, the method further includes: The n^{th} front-end module sends command processing information to the control module, where the command processing information includes a first command and identity information of a first queue, the first command is from the n^{th} host module, and the first queue is a queue that is in the front-end module and that is configured to manage the command from the n^{th} host module. The control module stores a correspondence between the identity information of the first queue and the first command; and when obtaining first feedback information corresponding to the first command, sends the first feedback information to the n^{th} front-end module based on the correspondence.

According to a third aspect, an embodiment of this application provides a storage apparatus. The storage apparatus includes the RAID card according to the first aspect or any one of the possible designs of the first aspect, and the storage apparatus further includes a plurality of disks.

According to a fourth aspect, an embodiment of this application provides a storage system. The storage system includes a plurality of storage apparatuses according to the third aspect.

### BRIEF DESCRIPTION OF DRAWINGS

FIG. 1 is a schematic diagram of a storage node with a single host + a single storage system;
FIG. 2 is a schematic diagram of a storage node with a plurality of hosts + a single storage system;
FIG. 3 is a schematic diagram of a storage pool system;
FIG. 4 is a schematic diagram of a storage apparatus;
FIG. 5 is a schematic block diagram of a structure of an RAID card according to an embodiment of this application;
FIG. 6 is a schematic diagram of a storage pool system according to an embodiment of this application;
FIG. 7 is a schematic flowchart of a command processing method according to an embodiment of this application;
FIG. 8 is a schematic block diagram of a structure of an RAID card according to an embodiment of this application; and
FIG. 9 is a schematic flowchart of a command processing method according to an embodiment of this application.

### DESCRIPTION OF EMBODIMENTS

The following describes technical solutions of this application with reference to accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "for example" and "such as" are used to represent giving an example, an illustration, or a description. Any embodiment or design scheme described as an "example" in this application should not be explained as being more preferred or having more advantages than another embodiment or design scheme. Exactly, the term "for example" is used to present a concept in a specific manner.

In embodiments of this application, "corresponding (corresponding, relevant)" and "corresponding (corresponding)" may be interchangeably used sometimes. It should be noted that meanings expressed by the terms are consistent when differences are not emphasized.

In embodiments of this application, sometimes a subscript such as W₁ may be written in an incorrect form such as W1. Expressed meanings are consistent when differences between them are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and emergence of new service scenarios, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to embodiments. Therefore, in this specification, statements, such as "in an embodiment", "in some embodiments", "in some other embodiments", and "in other embodiments", that appear at different places do not necessarily mean referring to a same embodiment. Instead, the statements mean referring to "one or more but not all embodiments", unless otherwise specifically emphasized in other ways. Terms "include", "contain", "have", and variants of the terms all mean "include but are not limited to", unless otherwise specifically emphasized in other ways.

In this application, "at least one" means one or more, and "a plurality of" means two or more. The term "and/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

A user may read and write data in a storage pool system by using a computer device, and may also manage storage resources in the storage pool system, for example, create a logical unit number (logical unit number, LUN) and delete a LUN. The device that is operated by the user and that is used to access the storage pool system may be referred to as a client device. The client device may be a desktop computer, a notebook computer, a tablet computer, a server, or the like. This is not limited in embodiments of this application. In some embodiments, descriptions such as "a user accesses a storage apparatus" may be understood as "the user accesses the storage apparatus by using a client device", and "a user manages a storage resource" may be understood as "the user manages the storage resource by using a client device".

To help a person skilled in the art better understand the technical solutions of this application, some related concepts related to the technical solutions of this application are first described.
1. A storage pool system, a storage node, a storage system, a storage apparatus, a redundant array of independent disks (redundant array of independent disks, RAID) system and a physical disk

One storage pool system may include a plurality of storage nodes. For example, a storage pool system 300 shown in FIG. 3 includes a plurality of storage nodes.

One storage node may include one storage system. For example, a storage node 100 shown in FIG. 1 includes a storage system 110.

One storage system may include a plurality of storage apparatuses. For example, the storage system 110 shown in FIG. 1 includes three storage apparatuses: a storage apparatus 111, a storage apparatus 112, and a storage apparatus 113.

One storage apparatus may include one or more physical disks. If one storage apparatus includes a plurality of physical disks, the plurality of physical disks may form a RAID system.

Unless otherwise specified, a disk in embodiments of this application is a physical disk. For example, a disk 401, a disk 402, a disk 403, a disk 404, a working disk, and a mirror disk in the following are all physical disks.

### 2. A RAID

A RAID technology combines individual physical disks to form a logical disk in different combination manners, thereby improving read performance of physical disks and data security. The different combinations are identified by RAID levels. Common RAID levels include RAID 0, RAID 1, RAID 2, and the like.

Different RAID levels represent different storage performance, data security, and storage costs.

RAID 0 is used as an example. RAID 0 divides data into several parts and writes the data to physical disks in an array in an order. RAID 0 can perform read and write operations concurrently, fully using bus bandwidth. Theoretically, read and write performance of a RAID 0 system including X physical disks is X times that of a single physical disk (X is a positive integer greater than 1), and storage efficiency of disk space is the highest (100%). However, RAID 0 does not provide data redundancy protection. Once data is damaged, the data cannot be recovered.

RAID 1 is used as an example. RAID 1 writes same data to a working disk and a mirror disk. Therefore, disk space usage is 50%. Time for writing the data is affected, but time for reading the data is not affected. RAID 0 provides the best data protection. Once the working disk is faulty, the system automatically reads the data from the mirror disk.

FIG. 4 is a schematic diagram of a storage apparatus. A storage apparatus 400 shown in FIG. 4 includes four disks: the disk 401, the disk 402, the disk 403, and the disk 404. The four disks can form a RAID system. It is assumed that a capacity of each of the four disks is 16 terabytes (Terabytes, TBs). If the RAID system is RAID 0, a total capacity of the storage apparatus 400 is 64 TB. If the RAID system is RAID 1, the total capacity of the storage apparatus 400 is 32 TB.

As shown in FIG. 4, the disk 401 to the disk 404 are connected to a RAID card 410. The RAID card is used to implement RAID function hardware. The RAID card 410 may include a plurality of interfaces, and each of the plurality of interfaces is used to connect to one disk. For example, the RAID card 410 may include an interface 411, an interface 412, an interface 413, and an interface 414. The disk 401 is connected to the interface 411, the disk 402 is connected to the interface 412, the disk 403 is connected to the interface 413, and the disk 404 is connected to the interface 414.

The storage apparatus 400 shown in FIG. 4 may be a storage apparatus in the storage node 100 shown in FIG. 1 or a storage apparatus in the storage node 200 shown in FIG. 2. The RAID card 410 may receive a command from a host of a storage node and process the received command. For example, if the command received by the RAID card 410 is a read command, the RAID card may obtain corresponding data from a disk that stores the data that needs to be read based on the read command, and send the obtained data to the host. For another example, if the RAID card 410 receives a LUN creation command, a corresponding LUN is created.

### 3. Erasure code (erasure code, EC)

In a conventional RAID, only a small quantity of disks are supported. If a plurality of distribution points and nodes exist in a system, the RAID cannot meet requirements. For example, RAID 5 allows only one disk to fail, and RAID 6 allows two disks to fail. EC can allow a plurality of disks to fail.

y copies of data may be added to x copies of original data (both x and y are positive integers), and any x copies of data in x+y copies of data can be recovered to original data. The x+y copies of data can be stored on different nodes. If any less than y copies of data become invalid, the remaining data can be used to recover the data. In other words, if EC coding of x+y can tolerate a failure of y data blocks, storage costs are 1+y/x, and usually, y<x. A node that stores one copy of data may be referred to as an EC node. In the storage pool system 300 shown in FIG. 3, data stored in one storage node may be used as one copy of data. In this case, one storage node may be used as one EC node. As shown in FIG. 3, a first-type storage node is an EC node configured to store the x copies of original data described above, and a second-type storage node is an EC node configured to store the y copies of backup data added based on the x copies of original data described above. If a storage node forming the storage pool system is the storage node shown in FIG. 1 or FIG. 2, EC can be performed only by using the storage node as a granularity. In this case, one storage node is equivalent to one EC node. A main reason for this result is that data stored in a storage apparatus of each storage node can be accessed only by using a host of the storage node. Therefore, if the host of the storage node is faulty, the data stored in the storage node cannot be accessed. In this case, the data stored in the storage node needs to be recovered by using another storage node.

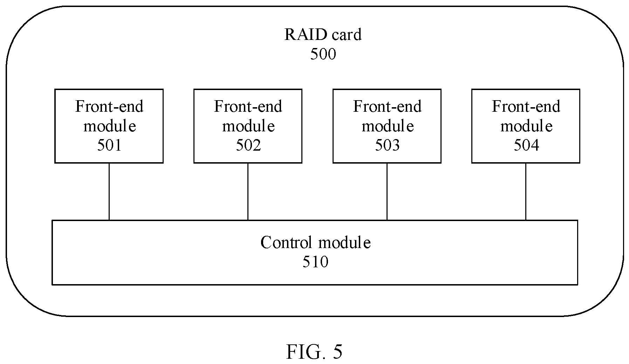

FIG. 5 is a schematic block diagram of a structure of an RAID card according to an embodiment of this application. A RAID card 500 shown in FIG. 5 includes a front-end module 501, a front-end module 502, a front-end module 503, and a front-end module 504. The RAID card 500 further includes a control module 510.

The front-end module 501 to the front-end module 504 are configured to receive commands from different host modules, and send the received commands to the control module 501. The control module 510 is configured to receive a command sent by the front-end module 501, and process the received command.

It may be understood that the RAID card 500 further includes an interface (which may be referred to as an uplink interface) used to connect to a host module and an interface (which may be referred to as a downlink interface) used to connect to a disk. Each of the front-end modules 501 to 504 is connected to a host module through a corresponding uplink interface, receives a command from the host module through the uplink interface, and sends feedback information corresponding to the command to the host module through the uplink interface. Similarly, the control module 501 may be connected to a disk through a downlink interface, send a received command to the disk through the downlink interface, and receive feedback information from the disk through the downlink interface.

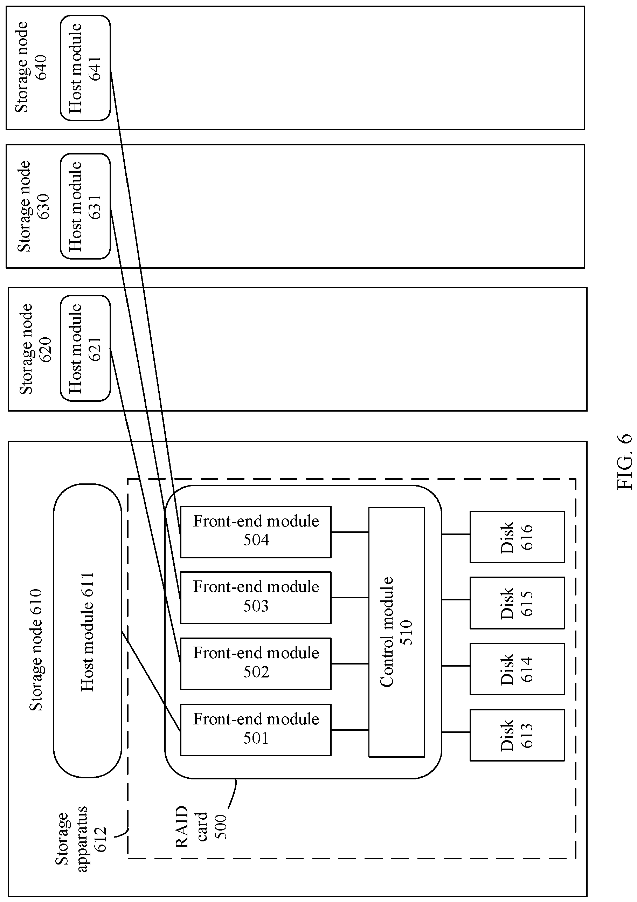

FIG. 6 is a schematic diagram of a storage pool system according to an embodiment of this application. The storage pool system shown in FIG. 6 includes a storage node 610, a storage node 620, a storage node 630, and a storage node 640. The storage node 610 includes a host module 611, the storage node 620 includes a host module 621, the storage node 630 includes a host module 631, and the storage node 640 includes a host module 641. Each of the storage node 610, the storage node 620, the storage node 630, and the storage node 640 may include a plurality of storage apparatuses, and each of the plurality of storage apparatuses may include one RAID card shown in FIG. 5. However, for ease of description, FIG. 6 shows only one storage apparatus 612 of a plurality of storage apparatuses included in the storage node 610.

As shown in FIG. 6, the storage apparatus 612 includes the RAID card 500, a disk 613, a disk 614, a disk 615, and a disk 616.

The front-end module 501 may receive a command from the host module 611. For ease of description, the command from the host module 611 is collectively referred to as a command A. A plurality of commands from the host module 611 may be separately referred to as a command A1, a command A2, and a command A3, and so on.

The front-end module 502 may receive a command from the host module 621. For ease of description, the command from the host module 621 is collectively referred to as a command B. A plurality of commands from the host module 621 may be separately referred to as a command B1, a command B2, and a command B3, and so on.

The front-end module 503 may receive a command from the host module 631. For ease of description, the command from the host module 631 is collectively referred to as a command C. A plurality of commands from the host module 631 may be separately referred to as a command C1, a command C2, and a command C3, and so on.

The front-end module 504 may receive a command from the host module 641. For ease of description, the command from the host module 641 is collectively referred to as a command D. A plurality of commands from the host module 641 may be separately referred to as a command D 1, a command D2, and a command D3, and so on.

The command sent by the host module to the front-end module is from a client device controlled by a user.

Based on a function of the command, the command may be classified into an input/output (input/output, IO) command and a management command. The I/O command is used to read data stored in a storage apparatus or write data into the storage apparatus. The management command is used to manage the storage apparatus. The management command includes LUN querying, a LUN creation command, LUN deleting, LUN parameter modifying, physical parameter querying, or the like.

Based on whether commands can be processed in parallel, the commands may be classified into an I/O command, a first-type management command, and a second-type management command. The first-type management command is a management command that can be processed in parallel with the I/O command, and the second-type management command is a management command that cannot be processed in parallel with the I/O command. The first-type management command includes a query command (for example, LUN querying and physical parameter querying). The second-type management command includes a command related to storage resource configuration, for example, the LUN creation command, LUN deleting, LUN parameter modifying.

The front-end module can manage a received command through a queue. The front-end module may add the received command to the queue, and send the command in the queue to the control module. Each queue may have identity information, and identity information of different queues is different.

In some embodiments, when sending a command to the control module, the front-end module may send, to the control module, identity information of a queue in which the command is located.

For example, the front-end module 501 receives the command A1, and manages the command A1 through a queue 1. It is assumed that identity information of the queue 1 is Q1. In this case, the front-end module 501 may send both the command A1 and the identity information Q1 of the queue 1 to the control module 510. For ease of description, information used to carry the command and the identity information of the queue may be referred to as command processing information. After receiving the command processing information, the front-end module 501 may establish a correspondence between the command and the identity information based on the command A1 and the identity information Q1 in the command processing information, and store the established correspondence. The front-end module 501 may deliver the command A1 to a corresponding disk, and receive feedback information R1 that corresponds to the command A1 and is fed back by the disk. The front-end module 501 determines, based on the stored correspondence between the command and the identity information, the identity information Q1 corresponding to the feedback information R1, and sends the feedback information R1 to a front-end module 501 corresponding to the identity information Q1. The front-end module 501 may send the feedback information R1 to the host module that sends the command A1.

As described above, different front-end modules may communicate with the control module 501 through different interfaces. Different ends may have different end identifications (identifications, IDs). Therefore, in some other embodiments, when receiving a command sent by the front-end module, the control module records an ID of an interface receiving the command, and establishes and stores a correspondence between the command and the ID of the interface. In this way, after receiving feedback information that corresponds to the command and that is sent by the disk, the control module may determine, based on the stored correspondence between the command and the ID of the interface, to send the feedback information to a corresponding front-end module (namely, a front-end module that sends the command corresponding to the feedback information). After receiving the feedback information, the front-end module may send the feedback information to a corresponding host module.

As shown in FIG. 6, the RAID card 500 may communicate with host modules from different storage nodes. In this way, even if the host module 611 of the storage node in which the RAID card 500 is located is faulty, the user may perform, by using another storage node, a read/write operation on data stored in the storage apparatus 612 in the storage node 610, or manage a storage resource of the storage apparatus 612. In this case, when EC is performed, EC may be performed by using a storage apparatus as a device. In other words, one storage apparatus is equivalent to one EC node. Compared with the conventional technology (where one storage node is one EC node), an amount of data stored in the EC node is greatly reduced. In this way, data in a faulty EC node can be recovered more quickly during data recovery.

In addition, when the RAID card 500 is used to implement EC, an EC solution is more flexible.

The storage pool system shown in FIG. 6 is further used as an example. The storage pool system includes four storage nodes. It is assumed that each storage node includes four storage apparatuses. In this way, the storage pool system includes 16 storage apparatuses in total. As described above, a quantity of first-type nodes (namely, nodes configured to store original data) is generally greater than a quantity of second-type nodes (namely, nodes configured to store backup data).

If a storage node is used as an EC node, there can be only one EC solution, that is, only one second-type node can exist in the four storage nodes, and the other three nodes are used as first-type nodes. In this case, EC usage is 3/4.

If a storage apparatus is used as an EC node, there may be a plurality of EC solutions. For example, 12 storage apparatuses in the 16 storage apparatuses are used as first-type nodes, and the other four storage apparatuses are used as second-type nodes. For another example, 14 storage apparatuses in the 16 storage apparatuses are used as first-type nodes, and the other two storage apparatuses are used as second-type nodes. For another example, 13 storage apparatuses in the 16 storage apparatuses are used as first-type nodes, and the other three storage apparatuses are used as second-type nodes.

It can be learned that a more flexible EC solution can be implemented by using a storage apparatus as an EC node. In addition, EC usage of some EC solutions in which a storage apparatus is used as an EC node is greater than EC usage of the EC solution in which a storage node is used as an EC node. As described above, if a storage node is used as an EC node, the EC usage is 3/4. If a storage apparatus is used as an EC node, and in an EC solution, 14 storage apparatuses in the 16 storage apparatuses are used as first-type nodes, and the other two storage apparatuses are used as second-type nodes, the EC usage is 14/16, where 14/16>3/4.

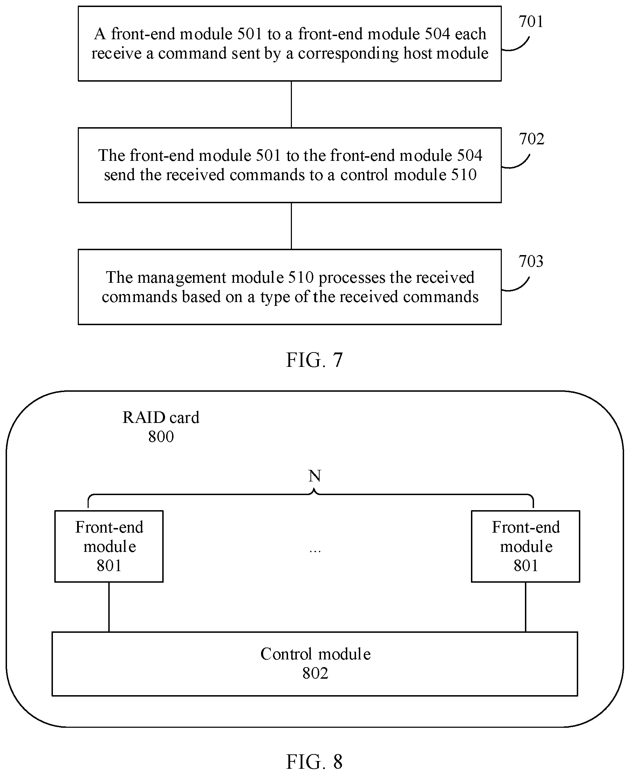

With reference to FIG. 7, the following describes how the RAID card 500 processes a received command.

FIG. 7 is a schematic flowchart of a command processing method according to an embodiment of this application.

701: The front-end module 501 to the front-end module 504 each receive a command sent by a corresponding host module.

For example, the front-end module 501 receives the command A1 sent by the host module 611; the front-end module 502 receives the command B1 sent by the host module 621; the front-end module 503 receives the command C1 sent by the host module 631; and the front-end module 504 receives the command D1 sent by the host module 641.

The four commands (namely, the command A1, the command B1, the command C1, and the command D1) may be any one of the following cases:
Case 1: All the four commands are I/O commands.
Case 2: All the four commands are first-type management commands.
Case 3: All the four commands are second-type management commands.
Case 4: Some commands in the four commands are I/O commands, and the other commands are first-type management commands.
Case 5: Some commands in the four commands are I/O commands, and the other commands are second-type management commands.
Case 6: Some commands in the four commands are I/O commands, some commands are first-type management commands, and the other commands are second-type management commands.
Case 7: Some commands in the four commands are first-type management commands, and the other commands are second-type management commands.

702: The front-end module 501 to the front-end module 504 send the received commands to the control module 510. In other words, the control module 510 receives the command A1 from the front-end module 501, receives the command B 1 from the front-end module 502, receives the command C1 from the front-end module 503, and receives the command D1 from the front-end module 504.

703: The control module 510 processes the received commands based on a type of the received commands.

As described above, the type of the commands received by the management module 510 may be any one of the foregoing seven cases.
(1) The type of the commands received by the management module 510 is the foregoing case 1, that is, all the four commands are I/O commands.

The management module 510 may read/write one of the four I/O commands, and cache the remaining three I/O commands.

Optionally, in some embodiments, the management module 510 may randomly select one I/O command to be sent to the disk, and cache the three remaining I/O commands that are not selected.

Optionally, in some other embodiments, the management module 510 may select, based on a priority, an I/O command that needs to be sent to the disk.

For example, in some embodiments, different front-end modules have different priorities. For example, a priority of the front-end module 501 is higher than a priority of the front-end module 502, the priority of the front-end module 502 is higher than a priority of the front-end module 503, and the priority of the front-end module 503 is higher than a priority of the front-end module 504. For another example, the priority of the front-end module 501 is higher than the priority of the front-end module 502, and priorities of the front-end module 502, the front-end module 503, and the front-end module 504 are the same. In this case, the management module 510 may select an I/O command from a front-end module with the highest priority to be sent to the disk.

For another example, in some other embodiments, priorities of different types of I/O commands are different. For example, a priority of a write command is higher than a priority of a read command. In this case, the management module 510 may first select the write command to be sent to the disk. If a plurality of write commands are received at the same time, one write command may be randomly selected to be sent to the disk.

It is assumed that the command A1, the command B1, the command C1, and the command D1 are all I/O commands. The management module 510 selects, based on priorities or randomly, the command A1 to be sent to the disk, and caches the command B1, the command C1, and the command D1.

A manner in which the management module 510 sends the I/O to the disk for processing is the same as an existing manner of sending the I/O to the disk For example, processing such as sorting, combination, and splitting may be performed on the I/O command, and the processed I/O command is sent to a corresponding disk. For brevity, implementations of sorting, combination, and splitting are not described herein.

It may be understood that sorting and combination processing on I/O commands need to be performed on a plurality of I/O commands. The plurality of I/O commands are from a same front-end module.

Optionally, in some embodiments, when determining that the command A1 needs to be sent to the disk, the management module 510 stops receiving an I/O command from another front-end module other than the front-end module 501, continues to receive the I/O command from the front-end module 501, and performs sorting and combination operations on the received I/O command and the I/O command received in step 702. For example, a command that the management module 510 continues to receive is the command A2. In this case, the management module 510 may perform sorting and combination processing on the command A1 and the command A2, and send the processed I/O commands to the corresponding disk.

Optionally, in some other embodiments, when determining that sorting and combination processing need to be performed on the command A1, the management module 510 may first cache the command A1, and continue to select, based on a priority or randomly, another I/O command to be sent to the disk until all the four I/O commands are all sent to the disk. Then, the management module 510 may receive commands delivered by the four front-end modules again. If the command from the front-end module 501 is an I/O command (which is assumed to be the command A2), the management module 510 may perform sorting and combination processing on the command A1 and the command A2, and send the processed I/O commands to the corresponding disk.

It may be understood that, the foregoing describes only how to obtain two I/O commands that need to be sorted and combined. The management module 510 may also perform sorting and combination processing on more than two I/O commands. A manner of obtaining more than two I/O commands that need to be sorted and combined is the same as that in the foregoing manner. For brevity, details are not described again.

After sending the processed I/O commands to the disk, the management module 510 may receive corresponding feedback information (for example, data that needs to be read or a feedback indicating that writing succeeds) sent by the disk, and send the received feedback information to the corresponding front-end module. A specific implementation of how the management module 510 sends the feedback information is described above. For brevity, details are not described again.

In some embodiments, before completing an I/O operation corresponding to the selected I/O command, the management module 510 may stop receiving an I/O command from another front-end module. Further, the command A1 is used as the selected I/O command, and it is assumed that feedback information corresponding to the command A1 is R1. Before sending the feedback information R1 to the front-end module 501, the management module 510 may stop receiving I/O commands from the front-end module 502, the front-end module 503, and the front-end module 504. In this way, a case in which a storage exception is caused because a plurality of I/O commands are sent to the disk at the same time can be avoided.

In some other embodiments, before completing an I/O operation corresponding to the selected I/O command, the management module 510 may continue to receive an I/O command from another front-end module. However, after receiving I/O commands from other front-end modules, the management module 510 does not process these I/O commands, but caches these I/O commands, and processes the I/O commands from the other front-end modules after an I/O channel is switched.

In some embodiments, before completing an I/O operation corresponding to the selected I/O command, the management module 510 may continue to receive first-type management commands from the four front-end modules, and process the received first-type management commands.

For ease of description, the following introduces four concepts: a management channel, an I/O channel, a management command submodule, and an I/O command submodule. The management command submodule and the I/O command submodule are submodules of the management module 510. The management command submodule processes a management command, and the I/O command submodule processes an I/O command. The I/O command is sent to the I/O command submodule through the I/O channel, and the management command is sent to the management command submodule through the management channel.

I/O channels are in a one-to-one correspondence with the front-end modules. In other words, the RAID card 500 may include four I/O channels: an I/O channel 1, an I/O channel 2, an I/O channel 3, and an I/O channel 4. An I/O command of the front-end module 501 is sent to the I/O command submodule through the I/O channel 1, an I/O command of the front-end module 502 is sent to the I/O command submodule through the I/O channel 2, an I/O command of the front-end module 503 is sent to the I/O submodule through the I/O channel 3, and an I/O command of the front-end module 504 is sent to the I/O submodule through the I/O channel 4.

Similarly, management channels are in a one-to-one correspondence with the front-end modules. The RAID card 500 may include four management channels: a management channel 1, a management channel 2, a management channel 3, and a management channel 4. A management command of the front-end module 501 is sent to the management command submodule through the management channel 1, a management command of the front-end module 502 is sent to the management command submodule through the management channel 2, a management command of the front-end module 503 is sent to the management submodule through the management channel 3, and a management command of the front-end module 504 is sent to the management submodule through the management channel 4.

In some embodiments, in a process of processing the command A1 from the I/O channel 1, the I/O command submodule may stop receiving an I/O command through the I/O channel 2 to the I/O channel 4, but may continue to receive the I/O command from the front-end module 501 through the I/O channel 1. In addition, in the process of processing the command A1 from the I/O channel 1, the I/O command submodule may continue to receive a management command through the management channel 1 to the management channel 4. In other words, in the process of processing the command A1 from the I/O channel 1, the I/O command submodule disables the I/O channel 2 to the I/O channel 4, and keeps the I/O channel 1 and the management channels 1 to 4 in an enabled state.

In some other embodiments, in the process of processing the command A1 from the I/O channel 1, the I/O command submodule may stop receiving an I/O command through the I/O channel 2 to the I/O channel 4, but may continue to receive the I/O command from the front-end module 501 through the I/O channel 1. In addition, in the process of processing the command A1 from the I/O channel 1, the I/O command submodule may continue to receive a management command through the management channel 1, but stop receiving a management command through the management channel 2 to the management channel 4. In other words, in the process of processing the command A1 from the I/O channel 1, the I/O command submodule disables the I/O channel 2 to the I/O channel 4 and the management channel 2 to the management 4, and keeps the I/O channel 1 and the management channel 1 in an enabled state.

In the process of processing the command A1 from the I/O channel 1, if the management command submodule receives a first-type management command, the management command submodule may process the received management command. For example, the management command submodule may obtain related information corresponding to query information, and feed back the obtained information to a corresponding front-end module. A specific implementation of processing the query information by the management command submodule is the same as an existing specific manner of processing the query information. For brevity, details are not described herein.

In the process of processing the command A1 from the I/O channel 1, if the management command submodule receives a second-type management command, the management command submodule may not process the received management command. In this way, an exception caused by an operation performed on a storage resource during a read/write operation can be avoided.

In some embodiments, when the received I/O command from the front-end module 501 meets a target condition, the management module 510 may start to receive a command from another front-end module, and stop receiving a command from a front-end module other than the another front-end module.

For example, when the received I/O command from the front-end module 501 meets the target condition, the management module 510 may start to receive a command from the front-end module 502, and stop receiving a command from a front-end module other than the front-end module 502.

In some embodiments, that the management module 510 determines that the I/O command from the front-end module 501 meets the target condition includes: The management module 510 determines that all I/O commands from the front-end module 501 have been processed. In other words, the management module 510 completes a read/write operation corresponding to the I/O command from the front-end module 501, and sends feedback information to the front-end module 501. In this case, the management module 510 may determine that the I/O command from the front-end module 501 meets the target condition.

In some other embodiments, that the management module 510 determines that the I/O command from the front-end module 501 meets the target condition includes: The management module 510 determines that some I/O commands from the front-end module 501 have been processed, and the other I/O commands time out.

For example, it is assumed that the management module 510 receives I/O commands from the front-end module 501, which are respectively the command A1 to a command A10. The management module 510 may determine, when processing of the command A1 to the command A8 has been completed and determining that the command A9 and the command A10 time out, that the I/O command from the front-end module 501 meets the target condition. When determining that the command A9 and the command A10 time out, the management module 510 may send a timeout indication A9 and a timeout indication A10 to the front-end module 501, where the timeout indication A9 is used to indicate that the command A9 times out, and the timeout indication A10 is used to indicate that the command A10 times out. In other words, the management module 510 completes read/write operations corresponding to the command A1 to the command A8, determines that the command A9 and the command A10 time out, and sends feedback information and timeout indications to the front-end module 501. In this case, the management module 510 may determine that the I/O command from the front-end module 501 meets the target condition. The timeout indications may be in a one-to-one correspondence with commands. For example, in the foregoing embodiment, the command A9 and the command A10 time out. In this case, the management module 510 sends two timeout indications to the front-end module 501, where the two timeout indications are respectively used to indicate that the command A9 and the command A10 time out. After receiving the timeout indication, the front-end module 501 may feed back the timeout indication to a corresponding host module (namely, the host module 611).

In some other embodiments, that the management module 510 determines that the I/O command from the front-end module 501 meets the target condition includes: The management module 510 determines that some I/O commands from the front-end module 501 have been processed, and the other I/O commands are discarded.

For example, it is assumed that the management module 510 receives I/O commands from the front-end module 501, which are respectively the command A1 to the command A10. The management module 510 may determine, when processing of the command A1 to the command A8 has been completed and the command A9 and the command A10 are discarded, that the I/O command from the front-end module 501 meets the target condition. In other words, the management module 510 completes read/write operations corresponding to the command A1 to the command A8, sends the feedback information to the front-end module 501, and discards the command A9 and the command A10. In this case, the management module 510 may determine that the I/O command from the front-end module 501 meets the target condition.

In some embodiments, the management module 510 may receive a switching request from a front-end module, where the switching request is used to indicate to stop receiving the I/O command from the front-end module 501, and receive an I/O command from another front-end module. In this case, the management module 510 stops receiving the I/O command from the front-end module 501, determines whether all the received I/O commands from the front-end module 501 are processed, and if all the I/O commands are processed, determines that the foregoing target condition is met. In some embodiments, if processing of some received I/O commands from the front-end module 501 is not completed when the switching request is received, it may be determined that an I/O command that is not completely processed times out, and a timeout indication is sent to the front-end module 501. In this case, the management module 501 may determine that the foregoing target condition is met. In some other embodiments, if processing of some received I/O commands from the front-end module 501 is not completed when the switching request is received, the I/O commands that are not completely processed are discarded, and after it is determined that these I/O commands are successfully discarded, it is determined that the foregoing target condition is met.

In some other embodiments, the management module 510 starts a timer when starting to process the I/O command from the front-end module 501, stops receiving the I/O command from the front-end module 501 when the timer reaches a preset time, and determines whether all the received I/O commands from the front-end module 501 are processed, and if all the I/O commands are processed, determines that the foregoing target condition is met. In some embodiments, if processing of some received I/O commands from the front-end module 501 is not completed when the timer reaches the preset time, it may be determined that the I/O commands that are not completely processed time out, and timeout indications are sent to the front-end module 501. In this case, the management module 501 may determine that the foregoing target condition is met. In some other embodiments, if processing of some received I/O commands from the front-end module 501 is not completed when the timer reaches the preset time, the I/O commands that are not completely processed may be discarded, and after it is determined that these I/O commands are successfully discarded, it is determined that the foregoing target condition is met. Preset times corresponding to different front-end modules may be the same or may be different.

In some other embodiments, the management module 510 may determine that a problem occurs in a newly received I/O command from the front-end module 501 (for example, the I/O command is faulty, or an error occurs when the I/O command is transmitted). In this case, the management module 510 may stop continuing to receive the I/O command from the front-end module 501, and determine whether processing of all I/O commands except the recently received I/O command from the front-end module 501 is completed. If processing of all I/O commands except the recently received I/O command from the front-end module 501 is completed, the recently received I/O command is discarded, or it may be determined that the recently received I/O command times out, and a timeout indication is fed back to the front-end module. In this case, it may be determined that the foregoing target condition is met.

(2) The type of the commands received by the management module 510 is the foregoing case 2, that is, all the four commands are first-type management commands.

In some embodiments, the management module 510 may process four first-type management commands at the same time.

In some other embodiments, the management module 510 may sequentially process the four first-type management commands. For example, the four first-type management commands may be processed based on a priority order or randomly.

If the management module 510 receives one or more I/O commands in a process of processing the first-type management commands, processing may be performed in a manner of processing the case 4.

If the management module 510 receives one or more second-type management commands in the process of processing the first-type management commands, processing may be performed in a manner of processing the case 7.

If the management module 510 receives one or more second-type management commands and one or more I/O commands in the process of processing the first-type management commands, processing may be performed in a manner of processing the case 6.

(3) The type of the commands received by the management module 510 is the foregoing case 3, that is, all the four commands are second-type management commands.

In this case, the management module 510 may process the four second-type management commands with reference to the manner of the case 1. In other words, the management module 510 separately processes the four second-type management commands randomly or based on priorities. The management module 510 does not process the four second-type management commands at the same time. In this way, a conflict can be avoided in a process of managing resource configuration.

If the management module 510 receives one or more I/O commands in a process of processing the second-type management commands, processing may be performed in a manner of processing the case 5.

If the management module 510 receives one or more first-type management commands in the process of processing the second-type management commands, processing may be performed in a manner of processing the case 7.

If the management module 510 receives one or more first-type management commands and one or more I/O commands in the process of processing the second-type management commands, processing may be performed in a manner of processing the case 6.

(4) The type of the commands received by the management module 510 is the foregoing case 4, that is, some commands in the four commands are I/O commands, and the other commands are first-type management commands.

The case 4 may further include the following two cases:

Case 4.1: There is only one I/O command among the four commands, and the remaining three commands are all first-type management commands.

Case 4.2: There are two or three I/O commands in the four commands, and the remaining command is a first-type management command.

For the case 4.1, the management module 510 may send the I/O command to the disk, and process some or all of the remaining three first-type management commands when sending the I/O command to the disk.

For the case 4.2, for a manner in which the management module 510 may process a plurality of I/O commands, refer to the processing manner of the case 1. The management module 510 may simultaneously process some or all of the first-type management commands when sending one I/O command of the plurality of I/O commands to the disk.

(5) The type of the commands received by the management module 510 is the foregoing case 5, that is, some commands in the four commands are I/O commands, and the other commands are second-type management commands.

In some embodiments, the management module 510 may first process the I/O commands, and then process the second-type management commands after processing the I/O commands.

It may be understood that, if a quantity of I/O commands in the four commands is greater than or equal to 2, the management module may process the plurality of I/O commands with reference to the manner of the case 1.

In some other embodiments, the management module 510 may first process the second-type management commands, and then process the I/O commands after processing the second-type management commands.

(6) The type of the commands received by the management module 510 is the foregoing case 6, that is, some commands in the four commands are I/O commands, some commands are first-type management commands, and the remaining commands are second-type management commands.

The case 6 may further include the following several cases:
Case 6.1: Two I/O commands, one first-type management command, and one second-type management command.
Case 6.2: Two first-type management commands, one I/O command, and one second-type management command.
Case 6.3: Two second-type management commands, one I/O command, and one first-type management command.

For the case 6.1, the management module 510 may first process the two I/O commands, and then process the second-type management command after completing processing of the I/O commands. The management module 510 may alternatively first process the second-type management command, and then process the two I/O commands after completing processing of the second-type management command. The first-type management command may be processed at the same time when the I/O commands are processed. For a manner in which the management module 510 processes the two I/O commands, refer to the processing manner of the case 1.

For the case 6.2, the management module 510 may first process the I/O command, and then process the second-type management command after completing processing of the I/O command. The management module 510 may alternatively first process the second-type management command, and then process the I/O command after completing processing of the second-type management command. The first-type management commands may be processed at the same time when the I/O command is processed.

For the case 6.3, the management module 510 may first process the I/O command, and then process the two second-type management commands after completing processing of the I/O command. The management module 510 may alternatively first process the two second-type management commands, and then process the I/O command after completing processing of the second-type management commands. The first-type management command may be processed at the same time when the I/O command is processed. For a manner in which the management module 510 processes the two second-type management commands, refer to the processing manner of the case 3.

(7) The type of the commands received by the management module 510 is the foregoing case 7, that is, some commands in the four commands are first-type management commands, and the other commands are second-type management commands.

In some embodiments, the management module 510 may first process the second-type management commands, and then process the first-type management commands after processing the second-type management commands.

In some other embodiments, the management module 510 may first process the first-type management commands, and then process the second-type management commands after processing the first-type management commands.

If a quantity of second-type management commands is greater than or equal to 2, the management module 510 may process the plurality of second-type management commands with reference to the processing manner of the case 3.

FIG. 8 is a schematic block diagram of a structure of an RAID card according to an embodiment of this application. A RAID card 800 shown in FIG. 8 includes N front-end modules 801. The RAID card 800 further includes a control module 802. N is a positive integer greater than or equal to 2.

An n^{th} front-end module in the N front-end modules 801 is configured to: receive a command from an n^{th} host module in N host modules, and send the received command to the control module, where the N host modules respectively belong to N storage apparatuses, and n=1, ..., N.

The control module 802 is configured to receive commands from the N front-end modules and process the received commands.

Optionally, in some embodiments, a type of the commands from the N host modules includes any one or more of an input/output I/O command, a first-type management command, or a second-type management command, and the control module is specifically configured to process the received command based on the type of the received command.

Optionally, in some embodiments, the control module 802 is specifically configured to: when processing an I/O command from the n^{th} front-end module, stop receiving an I/O command from another front-end module other than the n^{th} front-end module; and when determining that the I/O command from the n^{th} front-end module meets a target condition, receive and process an I/O command from an m^{th} front-end module in the N front-end modules, and stop receiving an I/O command from another front-end module other than the m^{th} front-end module, where m is a positive integer less than or equal to N and not equal to n.

Optionally, in some embodiments, the determining that the I/O command from the n^{th} front-end module meets a target condition includes: determining that the obtained I/O command from the n^{th} front-end module is processed; or determining that P₁ I/O commands in obtained P I/O commands from the n^{th} front-end module are processed, and P₂ I/O commands time out, where P is a positive integer greater than or equal to 2, P₁ and P₂ are positive integers greater than or equal to 1 and less than P, and a sum of P₁ and P₂ is P.

Optionally, in some embodiments, before the determining that the I/O command from the n^{th} front-end module meets a target condition, the control module 802 stops receiving the I/O command from the n^{th} front-end module.

Optionally, in some embodiments, the control module 802 is further configured to: when processing the I/O command from the n^{th} front-end module, receive and process a first-type management command from one or more front-end modules in the N front-end modules.

Optionally, in some embodiments, the n^{th} front-end module is further configured to send command processing information to the control module. The command processing information includes a first command and identity information of a first queue, the first command is from the n^{th} host module, and the first queue is a queue that is in the front-end module and that is configured to manage the command from the n^{th} host module. The control module 802 is further configured to: store a correspondence between the identity information of the first queue and the first command; and when obtaining first feedback information corresponding to the first command, send the first feedback information to the n^{th} front-end module based on the correspondence.

For specific functions and beneficial effect of the front-end modules 801 and the control module 802, refer to the foregoing embodiments. For brevity, details are not described herein again.

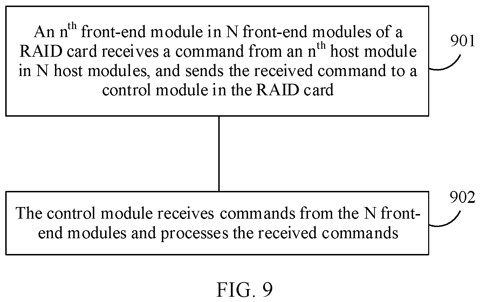

FIG. 9 is a schematic flowchart of a command processing method according to an embodiment of this application.

901: An n^{th} front-end module in N front-end modules of a RAID card receives a command from an n^{th} host module in N host modules, and sends the received command to a control module in the RAID card, where the N host modules respectively belong to N storage apparatuses, N is a positive integer greater than or equal to 2, and n=1, ..., N.

902: The control module receives commands from the N front-end modules and processes the received commands.

Optionally, in some embodiments, a type of the command from the N host modules includes any one or more of an input/output I/O command, a first-type management command, or a second-type management command, and the control module is specifically configured to process the received command based on the type of the received command.

Optionally, in some embodiments, the processing the received commands includes: when processing an I/O command from the n^{th} front-end module, stopping receiving an I/O command from another front-end module other than the n^{th} front-end module; and when determining that the I/O command from the n^{th} front-end module meets a target condition, receiving and processing an I/O command from an m^{th} front-end module in the N front-end modules, and stopping receiving an I/O command from another front-end module other than the m^{th} front-end module, where m is a positive integer less than or equal to N and not equal to n.

Optionally, in some embodiments, the determining that the I/O command from the n^{th} front-end module meets a target condition includes: determining that the obtained I/O command from the n^{th} front-end module is processed; or determining that P₁ I/O commands in obtained P I/O commands from the n^{th} front-end module are processed, and P₂ I/O commands time out, where P is a positive integer greater than or equal to 2, P₁ and P₂ are positive integers greater than or equal to 1 and less than P, and a sum of P₁ and P₂ is P.

Optionally, in some embodiments, before the determining that the I/O command from the n^{th} front-end module meets a target condition, the method further includes: stopping receiving the I/O command from the n^{th} front-end module.

Optionally, in some embodiments, the method further includes: When processing the I/O command from the n^{th} front-end module, the control module receives and processes a first-type management command from one or more of the N front-end modules.

Optionally, in some embodiments, the method further includes: The n^{th} front-end module sends command processing information to the control module, where the command processing information includes a first command and identity information of a first queue, the first command is from the n^{th} host module, and the first queue is a queue that is in the front-end module and that is configured to manage the command from the n^{th} host module. The control module stores a correspondence between the identity information of the first queue and the first command; and when obtaining first feedback information corresponding to the first command, sends the first feedback information to the n^{th} front-end module based on the correspondence.

An embodiment of this application further provides a storage apparatus. The storage apparatus includes the RAID card shown in FIG. 8, and the storage apparatus further includes a plurality of disks.

An embodiment of this application provides a storage system. The storage system includes a plurality of storage apparatuses, and each of the plurality of storage apparatuses includes the RAID card shown in FIG. 8.

Each module in the RAID card may be implemented by a chip. The chip in this embodiment of this application may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), another programmable logic device, a discrete gate or a transistor logic device, a discrete hardware component, or another integrated chip.

In an implementation process, steps in the foregoing methods can be implemented by using a hardware integrated logical circuit in a processor, or by using instructions in a form of software. The steps of the methods disclosed with reference to embodiments of this application may be directly performed by a hardware processor, or may be performed by using a combination of hardware and software modules in the processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. A general-purpose processor may be a microprocessor, or the processor may be any conventional processor or the like. Steps of the methods disclosed with reference to embodiments of this application may be directly performed by a hardware decoding processor, or may be performed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another proper type.

According to the method provided in embodiments of this application, this application further provides a computer program product. The computer program product includes computer program code. When the computer program code is run on a computer, the computer is enabled to perform the method in any one of the foregoing embodiments.

According to the method provided in embodiments of this application, this application further provides a computer-readable medium. The computer-readable medium stores program code. When the program code is run on a computer, the computer is enabled to perform the method in any one of the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A redundant array of independent disks RAID card, comprising: a control module and N front-end modules, wherein N is a positive integer greater than or equal to 2, wherein
an n^{th} front-end module in the N front-end modules is configured to: receive a command from an n^{th} host module in N host modules, and send the received command to the control module, wherein the N host modules respectively belong to N storage apparatuses, and n=1, ..., N; and
the control module is configured to receive commands from the N front-end modules and process the received commands.

2. The RAID card according to claim 1, wherein a type of the commands from the N host modules comprises any one or more of an input/output I/O command, a first-type management command, or a second-type management command, and the control module is specifically configured to process the received command based on the type of the received command.

3. The RAID card according to claim 2, wherein the control module is specifically configured to: when processing an I/O command from the n^{th} front-end module, stop receiving an I/O command from another front-end module other than the n^{th} front-end module; and
when determining that the I/O command from the n^{th} front-end module meets a target condition, receive and process an I/O command from an m^{th} front-end module in the N front-end modules, and stop receiving an I/O command from another front-end module other than the m^{th} front-end module, wherein m is a positive integer less than or equal to N and not equal to n.

4. The RAID card according to claim 3, wherein the determining that the I/O command from the n^{th} front-end module meets a target condition comprises:
determining that the obtained I/O command from the n^{th} front-end module is processed; or
determining that P₁ I/O commands in obtained P I/O commands from the n^{th} front-end module are processed, and P₂ I/O commands time out, wherein P is a positive integer greater than or equal to 2, P₁ and P₂ are positive integers greater than or equal to 1 and less than P, and a sum of P₁ and P₂ is P.

5. The RAID card according to claim 3 or 4, wherein before the determining that the I/O command from the n^{th} front-end module meets a target condition, the control module stops receiving the I/O command from the n^{th} front-end module.

6. The RAID card according to any one of claims 3 to 5, wherein the control module is further configured to:
when processing the I/O command from the n^{th} front-end module, receive and process a first-type management command from one or more front-end modules in the N front-end modules.

7. The RAID card according to any one of claims 1 to 6, wherein the n^{th} front-end module is further configured to send command processing information to the control module, wherein the command processing information comprises a first command and identity information of a first queue, the first command is from the n^{th} host module, and the first queue is a queue that is in the front-end module and that is configured to manage the command from the n^{th} host module; and
the control module is further configured to: store a correspondence between the identity information of the first queue and the first command; and when obtaining first feedback information corresponding to the first command, send the first feedback information to the n^{th} front-end module based on the correspondence.

8. A command processing method, wherein the method comprises:
receiving, by an n^{th} front-end module in N front-end modules of a redundant array of independent disks RAID card, a command from an n^{th} host module in N host modules, and sending the received command to a control module in the RAID card, wherein the N host modules respectively belong to N storage apparatuses, N is a positive integer greater than or equal to 2, and n=1, ..., N; and
receiving, by the control module, commands from the N front-end modules, and processing the received commands.

9. The method according to claim 8, wherein a type of the commands from the N host modules comprises any one or more of an input/output I/O command, a first-type management command, or a second-type management command, and the control module is specifically configured to process the received command based on the type of the received command.

10. The method according to claim 9, wherein the processing the received commands comprises: when processing an I/O command from the n^{th} front-end module, stopping receiving an I/O command from another front-end module other than the n^{th} front-end module; and
when determining that the I/O command from the n^{th} front-end module meets a target condition, receiving and processing an I/O command from an m^{th} front-end module in the N front-end modules, and stopping receiving an I/O command from another front-end module other than the m^{th} front-end module, wherein m is a positive integer less than or equal to N and not equal to n.

11. The method according to claim 10, wherein the determining that the I/O command from the n^{th} front-end module meets a target condition comprises:
determining that the obtained I/O command from the n^{th} front-end module is processed; or
determining that P₁ I/O commands in obtained P I/O commands from the n^{th} front-end module are processed, and P₂ I/O commands time out, wherein P is a positive integer greater than or equal to 2, P₁ and P₂ are positive integers greater than or equal to 1 and less than P, and a sum of P₁ and P₂ is P.

12. The method according to claim 10 or 11, wherein before the determining that the I/O command from the n^{th} front-end module meets a target condition, the method further comprises:
stopping receiving the I/O command from the n^{th} front-end module.

13. The method according to any one of claims 10 to 12, wherein the method further comprises: when processing the I/O command from the n^{th} front-end module, receiving and processing, by the control module, a first-type management command from one or more of the N front-end modules.

14. The method according to any one of claims 8 to 13, wherein the method further comprises:
sending, by the n^{th} front-end module, command processing information to the control module, wherein the command processing information comprises a first command and identity information of a first queue, the first command is from the n^{th} host module, and the first queue is a queue that is in the front-end module and that is configured to manage the command from the n^{th} host module; and
storing, by the control module, a correspondence between the identity information of the first queue and the first command; and when obtaining first feedback information corresponding to the first command, sending, by the control module, the first feedback information to the n^{th} front-end module based on the correspondence.

15. A storage apparatus, wherein the storage apparatus comprises the redundant array of independent disks RAID card according to any one of claims 1 to 7, and the storage apparatus further comprises a plurality of disks.

16. A storage system, wherein the storage system comprises a plurality of storage apparatuses according to claim 15.
